# EUROPÄISCHE PATENTANMELDUNG

(11) **EP 2 845 926 A1**
(43) Veröffentlichungstag der Anmeldung: **11.03.2015**
(21) Anmeldenummer: 14183227.9
(22) Anmeldetag: 02.09.2014
(51) Int. Cl.: C23C 28/04, C23C 28/00, F01D 5/28

(54) **Wärmedämmschichtsystem mit Korrosions- und Erosionsschutz**

(30) Priorität: 04.09.2013 DE 102013217627
(71) Anmelder: MTU Aero Engines AG, 80995 München (DE)
(72) Erfinder: Döbber, Philipp, 30161 Hannover (DE)

(57) **Zusammenfassung**

Die Erfindung betrifft ein Wärmedämmschichtsystem für metallische Bauteile, insbesondere für hochtemperaturbelastete und/oder heißgasbelastete Bauteile einer Strömungsmaschine, mit mindestens einer Wärmedämmschicht (4) aus einem Material, welches mindestens eine Komponente mit mindestens einer Phase umfasst, die stöchiometrisch 1 bis 80 Mol-% Mx₂O₃, 0,5 bis 80 Mol-% MyO und als Rest Al₂O₃ und unvermeidbare Verunreinigungen enthält, wobei Mx aus den Elementen Lanthan, Neodym, Chrom oder Mischungen daraus ausgewählt ist und My aus Erdalkalimetallen, Übergangsmetallen, seltenen Erden oder Mischungen daraus ausgewählt ist, wobei auf der mindestens einen Wärmedämmschicht (4) an der vom Bauteil abgewandten Seite eine Al₂O₃ - Schicht (5) ausgebildet ist.

## Beschreibung

### GEBIET DER ERFINDUNG

Die vorliegende Erfindung betrifft ein Wärmedämmschichtsystem für ein metallisches Bauteil nach dem Oberbegriff des Anspruchs 1 sowie ein entsprechendes Bauteil.

### STAND DER TECHNIK

Strömungsmaschinen, wie stationäre Gasturbinen und Flugzeugtriebwerke, werden zur Steigerung der Effizienz bei immer höheren Verbrennungstemperaturen betrieben, so dass Bauteile im mit Heißgas beaufschlagten Bereichen der Brennkammer und der Hochdruckturbine durch aktive Kühlung und Wärmedämmschichtsysteme geschützt werden müssen.

Bekannte Wärmedämmschichtsysteme (WDS) umfassen eine metallische Haftschicht, die gleichermaßen als Oxidations - und Korrosionsschutz dient, sowie eine verbesserte Haftfestigkeit einer im WDS außen angeordneten Keramikschicht aufweist. Haftschichten basieren im Allgemeinen auf Aluminiumschichten oder Platin - Aluminium - Schichten sowie MCrAlY - Legierungen, wobei M für ein Metall wie Nickel, Kobalt oder Eisen steht. Die keramischen Deckschichten bestehen üblicherweise aus Zirkonoxid, das mit Magnesium, Calcium oder Yttrium bzw. Yttriumoxid stabilisiert ist (YSZ yttriumstablisiertes Zirkonoxid).

Obwohl derartige Wärmedämmschichten bereits hervorragende Eigenschaften aufweisen, bestehen Probleme darin, dass Flugzeugtriebwerke enormen Sand- und Staubbelastungen ausgesetzt sein können, wie bspw. Aschepartikeln oder industriell induzierten Stäuben. Diese verflüssigen sich bei hohen Temperaturen und interagieren thermo - mechanisch und thermo - chemisch mit der WDS durch Infiltration von Mikrorissen und offenen Poren in der äußeren Keramikschicht. Dadurch kommt es zur Zersetzung und Versprödung und somit zu einem entsprechenden Versagen der Wärmedämmschicht, so dass die durch die Wärmedämmschicht geschützten Bauteile ausgetauscht bzw. repariert werden müssen. Dies führt zu einem erheblichen Aufwand, so dass ein Schutz der Wärmedämmschichten vor Beschädigung durch Sand und Staub schmelzen erforderlich ist.

Aus dem Stand der Technik sind bereits Maßnahmen zum Schutz von Wärmedämmschichten vor Schädigungen durch Sandschmelzen bekannt, wobei durch Anordnung von reaktiven Oxiden oberhalb oder im äußeren Bereich der Keramikschicht der Wärmedämmschicht ein Schutz dadurch bewirkt werden soll, dass durch Reaktion der Schmelze mit den reaktiven Oxiden eine stabile kristalline Schicht oberhalb der Wärmedämmschicht gebildet werden soll, die vor einem weiteren Angriff durch Sandschmelzen schützt. Beispiele für derartige Schutzmaßnahmen sind in der US 2004/0170849 A1, der EP 1 428 902 A1, der US 5,660,885 A, der US 7,780,832 B2, der EP 0 783043 A1, der US 5,338,577 A und der US 7,833,586 B2 genannt.

Weiterhin ist aus der US 7,445,851 B2 ein gegenüber dem YSZ - Schichtsystem sinterungsbeständigeres WDS bekannt, bei dem die Keramikschicht als Doppellagenschichtsystem ausgeführt. Hierbei ist zusätzlich zu einer teilstabilisierten Zirkonoxidschicht eine äußere Deckschicht aus einem Aluminat vorgesehen. Diese Deckschicht aus vorzugsweise Lanthanhexaaluminat (LHA) mit Magnetoplumbit - Struktur ist besonders beständig gegen Zusammensintern bei hohen Temperaturen, weshalb sie sich als Wärmedämmschicht auf Brennkammer- und Turbinenkomponenten im Heißgasstrom eignet.

In der Patentfamilie um US 8,153,274 B2 ist das oben genannte LHA - Schichtsystem um eine zusätzliche Erosionsschutzlage, bestehend aus YSZ, ergänzt, welche die sinterungsbeständige und reaktive LHA - Schicht vor erosivem Abtrag schützt.

### OFFENBARUNG DER ERFINDUNG

### AUFGABE DER ERFINDUNG

Hiervon ausgehend liegt der vorliegenden Erfindung die Aufgabe zu Grunde, eine kombinierte Korrosions - und Erosionsschutzschicht für Brennkammer- und Turbinenkomponenten in Flugzeugtriebwerken und stationären Gasturbinen zu schaffen, die effektiv Schutz gegen erosiven Abtrag und gleichzeitigen Schutz vor korrosiven Angriff durch Sand- und Staubschmelzen bietet. Darüber hinaus sollen entsprechende Bauteile bereit gestellt werden, die einfach und zuverlässig herstellbar sind.

### TECHNISCHE LÖSUNG

Diese Aufgabe wird gelöst durch ein Wärmedämmschichtsystem mit den Merkmalen des Anspruchs 1 und Bauteile mit den Merkmalen des Anspruchs 12. Vorteilhafte Ausgestaltungen sind Gegenstand der abhängigen Ansprüche.

Die Lösung geht von der Idee aus, dass eine zusätzliche Aluminiumoxidschicht oberhalb einer Wärmedämmschicht aus einem Material aufgebracht wird, welches mindestens eine Komponente mit mindestens einer Phase umfasst, die stöchiometrisch 1 bis 80 Mol-% Mx₂O₃, 0,5 bis 80 Mol-% MyO und als Rest Al₂O₃ und unvermeidbare Verunreinigungen enthält, wobei Mx aus den Elementen Lanthan, Neodym, Chrom oder Mischungen daraus ausgewählt ist und My aus Erdalkalimetallen, Übergangsmetallen, seltenen Erden oder Mischungen daraus ausgewählt ist. Eine derartige Schicht des Wärmedämmschichtsystems wird nachfolgend sowohl nur als Wärmedämmschicht als auch als Aluminat - Wärmedämmschicht bezeichnet.

Insbesondere kann die Aluminiumoxidschicht über einer LHA - Schicht und anstelle der im Patent US 8,153,274 B2 genannten YSZ - Schicht vorgesehen sein, so dass neben einem Erosionsschutz vor allem auch ein Schutz gegen Korrosion durch Sand- und Staubschmelzen sowie durch Sulfat - Angriff erzielt wird.

Hintergrund der Erfindung ist, dass ein hoher Aluminiumoxidgehalt der Aluminat - Wärmedämmschicht, insbesondere der Lanthanhexaaluminatschicht, vorzugsweise in Kombination mit Lanthanoxid die Infiltration der Sandschmelze durch entsprechende Reaktionen und Phasenumwandlungen der Schmelze mit höheren Schmelztemperaturen verglichen mit dem YSZ des Standardschichtsystems verlangsamt. Somit wird die Betriebsdauer des Schichtsystems und Bauteils entsprechend heraufgesetzt. Allerdings wird durch den hohen Anteil der in der vorzugsweise vorliegenden Magnetoplumbitstruktur gebundenen Aluminium- und Lanthanoxidteilchen die Reaktion nicht gänzlich gestoppt, sondern nur verlangsamt, wobei aber die sinterungsbeständigere Magnetoplumbitstruktur stabil gehalten werden kann.

Durch eine zusätzliche Schichtlage aus Al₂0₃ oberhalb der Aluminat - Wärmedämmschicht, insbesondere oberhalb der LHA - Schicht, kann nunmehr die Infiltration der Sandschmelze gänzlich gestoppt werden. Aufgrund nicht gebundener Al₂0₃ - Partikel in der obersten Deckschicht beginnt die Kristallisation der Sandschmelze bereits oberhalb der Aluminat - Wärmedämmschicht und kristallisiert innerhalb der Aluminat - Wärmedämmschicht komplett. Eine Infiltration der Schmelze in das Wärmedämmschichtsystem wird somit unterbunden.

Ein weiterer Vorteil der Al₂0₃ - Schicht liegt im Schutz der Aluminat - Wärmedämmschicht gegen Sulfat - Angriff. Das vorzugsweise in der Aluminat - Wärmedämmschicht vorliegende Lanthanoxid ist beispielsweise korrosionsanfällig in Anwesenheit von schwefelhaltigen Stoffen und wird dementsprechend zersetzt. Eine oberhalb liegende Al₂0₃ - Deckschicht verhindert den Korrosionsangriff und schützt die Aluminat - Wärmedämmschicht.

Zudem bietet eine zusätzlich oberhalb der Aluminat - Wärmedämmschicht liegende Al₂0₃ - Deckschicht einen Erosionsschutz für die Aluminat - Wärmedämmschicht. Al₂0₃ - Schichten bieten aufgrund der hohen Härte einen hervorragenden Schutz vor erosivem Abtrag.

Bei der Aluminat - Wärmedämmschicht kann der Bestandteil My insbesondere aus Magnesium, Zink, Kobalt, Mangan, Eisen, Nickel, Chrom, Europium, Samarium oder Mischungen daraus gewählt werden.

Vorzugsweise kann die mindestens eine Phase der Aluminat - Wärmedämmschicht stöchiometrisch 2 bis 20 Mol-%, insbesondere 5 bis 9 Mol-% Mx₂O₃, 5 bis 25 Mol-%, insbesondere 12 bis 17 Mol-% MyO und der Rest Aluminiumoxid aufweisen, wobei die Phase insbesondere eine Lanthanhexaaluminat - Phase mit Magnetoplumbitstruktur sein kann, wie bereits oben erwähnt.

Das Wärmedämmschichtsystem kann neben der beschriebenen Aluminat - Wärmedämmschicht und der darauf in Richtung nach außen angeordneten Aluminiumoxidschicht mindestens eine weitere innere, zwischen dem Bauteil und der Wärmedämmschicht angeordnete Teilschicht aufweisen, wobei die innere Teilschicht eine Keramikschicht ist, die insbesondere Zirkonoxid und/oder ein teil- oder vollstabilisiertes Zirkonoxid umfassen kann. Die Stabilisierung des Zirkonoxids kann durch Yttrium, Yttriumoxid, Calzium oder Magnesium erfolgen.

Zwischen der inneren Teilschicht und dem Bauteil kann weiterhin eine Haftvermittlerschicht vorgesehen sein, die durch eine metallische Schicht gebildet sein kann. Vorzugsweise kann die metallische Schicht eine Aluminiumschicht, eine Platin - Aluminium - Schicht oder eine MCrAlY - Schicht sein, bei der M gleich Eisen, Nickel oder Kobalt ist. Die Aluminiumschicht und die Platin - Aluminium - Schicht können als Diffusionsschichten ausgebildet sein, die durch einen Diffusionsprozess auf dem Bauteil aufgebracht werden können.

Die Aluminiumoxidschicht auf der nach außen gewandten Seite der Wärmedämmschicht weist überwiegend Aluminiumoxid auf, insbesondere mehr als 50 Mol-% Aluminiumoxid, vorzugsweise mindestens 60 Mol-% Aluminiumoxid.

Darüber hinaus kann die Aluminiumoxidschicht weitere Bestandteile aufweisen, und zwar ein oder mehrere Elemente wie Magnesium, Calzium, Silizium, Titan, Chrom, Mangan, Hafnium, Tantal, Platin, Cer, Neodym, Gadolinium, Dysprosium und Lanthan sowie Oxide daraus. Ferner können Zirkonoxid, stabilisiertes oder teilstabilisiertes Zirkonoxid und Mischungen der oben genannten Elemente und Verbindungen enthalten sein. Das Zirkonoxid kann, wie bereits die innere Teilschicht, durch Yttrium, Yttriumoxid, Calzium oder Magnesium stabilisiert sein.

Die Aluminiumoxidschicht, die Wärmedämmschicht, die innere Teilschicht und/oder die Haftvermittlerschicht können jeweils eine Schichtdicke im Bereich von 0,1 bis 1000 µm, insbesondere 0,2 bis 500 µm, aufweisen.

Das Wärmedämmschichtsystem kann mehrere Wärmedämmschichten und/oder mehrere innere Teilschichten und/oder mehrere Aluminiumoxidschichten aufweisen, die beispielsweise in der Reihenfolge innere Teilschicht, Wärmedämmschicht und Aluminiumoxidschicht von innen nach außen wiederholt im Wärmedämmschichtsystem vorliegen können. Darüber hinaus können mehrere dieser Schichten auch in beliebiger Reihenfolge im Wärmedämmschichtsystem angeordnet sein.

Das erfindungsgemäße Wärmedämmschichtsystem bzw. die metallische Haftvermittlerschicht, die innere Teilschicht, die Wärmedämmschicht und die Aluminiumoxidschicht können durch thermisches Spritzen oder durch physikalische Dampfphasenabscheidung PVD (Physical Vapor Deposition) bzw. elektronenstrahlunterstützte physikalische Dampfphasenabscheidung EB-PVD (Electron Beam Physical Vapor Deposition) oder chemische Dampfphasenabscheidung CVD (Chemical Vapor Deposition) auf dem Bauteil aufgebracht werden. Die bevorzugten, aber nicht ausschließlichen Verfahren des thermischen Spritzens sind Plasmaspritzen, Drahtflammspritzen, Lichtbogenspritzen, Pulverflammspritzen, Hochgeschwindigkeitsflammspritzen, Laserspritzen, Kaltgasspritzen, Schmelzbadspritzen, Detonationsspritzen und deren Varianten.

Das Bauteil, auf dem ein erfindungsgemäßes Wärmedämmschichtsystem aufgebracht wird, ist vorzugsweise aus einem Metall gebildet, kann aber auch als metallkeramisches Komposit ausgebildet sein, so dass die Bauteilsubstratoberfläche, auf der das Wärmedämmschichtsystem aufgebracht ist, metallisch oder gemischt metallisch - keramisch ausgebildet sein kann.

Das Bauteil kann insbesondere eine Komponente einer Gasturbine, insbesondere eines Flugzeugtriebwerks ausgebildet sein und ein Teil einer Brennkammer- oder Turbinenkomponente einer Gasturbine, insbesondere eines Flugzeugtriebwerks sein.

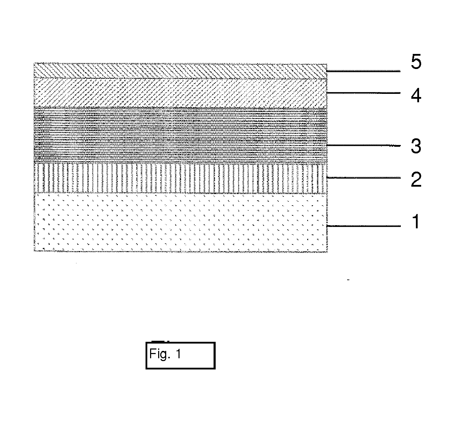

### KURZBESCHREIBUNG DER FIGUR

Die beigefügte Figur zeigt in einer rein schematischen Weise einen teilweisen Schnitt durch ein erfindungsgemäßes Bauteil mit einem Wärmedämmschichtsystem.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschränkt.

Die beigefügte Figur zeigt eine Ausführungsform eines erfindungsgemäßen Wärmedämmschichtsystems im teilweisen Querschnitt auf einem entsprechenden Bauteilsubstrat 1 zur Bildung eines erfindungsgemäßen Bauteils, wie beispielsweise einer Turbinenschaufel oder einer Brennkammerauskleidung. Das Bauteilsubstrat 1 kann ein metallischer Werkstoff oder ein Metall - Keramik - Komposit sein. Auf dem Bauteilsubstrat 1 ist eine Haftvermittlerschicht 2 ausgebildet, die als Aluminium - Diffusionsschicht oder als Al - Pt - Diffusionsschicht ausgebildet sein kann. Die entsprechende Haftvermittlerschicht 2 wird entsprechend durch Diffusionsprozesse auf dem Bauteilsubstrat 1 abgeschieden.

Oberhalb der Haftvermittlerschicht befindet sich in Richtung der vom Bauteilsubstrat 1 abgewandten Seite eine innere Teilschicht 3 aus einem keramischen Material, wie beispielsweise aus stabilisiertem oder teilstabilisiertem Zirkonoxid, wobei in dem gezeigten Ausführungsbeispiel vorzugsweise yttriumteilstabilisiertes Zirkonoxid Verwendung findet.

Auf der vom Bauteilsubstrat 1 abgewandten Seite der inneren Teilschicht 3 ist eine Aluminat - Wärmedämmschicht 4 vorgesehen, die vorzugsweise durch Lanthanhexaaluminat mit Magnetoplumbitstruktur gebildet sein kann.

Bei dem gezeigten Ausführungsbeispiel ist abschließend auf der Aluminat - Wärmedämmschicht 4 als äußere Deckschicht eine Aluminiumoxidschicht 5 aufgebracht, die bei dem gezeigten Ausführungsbeispiel als reine Aluminiumoxidschicht ausgebildet sein kann.

Obwohl die vorliegende Erfindung anhand des Ausführungsbeispiels und der als bevorzugt dargestellten Varianten des Wärmedämmschichtsystems detailliert beschrieben worden ist, ist für den Fachmann selbstverständlich, dass die Erfindung nicht auf das Ausführungsbeispiel oder die bevorzugten Varianten beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der vorgestellten Merkmale mit ein.

Bei den angegebenen Zusammensetzungen von Werkstoffen und Materialeln ist klar, dass diese Materialien zusätzlich unvermeidbare Verunreinigungen aufweisen können, auch wenn diese nicht explizit genannten sind. Darüber hinaus ist ebenfalls selbstverständlich, dass die angegebenen Zusammensetzungen so gewählt werden müssen, dass die einzelnen Bestandteile zusammen 100 % ergeben. Bei überlappendem Zusammensetzungsbereich sind die Anteile entsprechend anzupassen, d. h. bei der Wahl einer Komponente am maximalen Ende des Zusammensetzungsbereichs ist die andere Komponente entsprechend im unteren Zusammensetzungsbereich zu wählen, falls ansonsten die Zusammensetzung von 100 % überschritten wird.

## Patentansprüche

1. Wärmedämmschichtsystem für metallische Bauteile, insbesondere für hochtemperaturbelastete und/oder heißgasbelastete Bauteile einer Strömungsmaschine, mit mindestens einer Wärmedämmschicht (4) aus einem Material, welches mindestens eine Komponente mit mindestens einer Phase umfasst, die stöchiometrisch 1 bis 80 Mol-% Mx₂O₃, 0,5 bis 80 Mol-% MyO und als Rest Al₂O₃ und unvermeidbare Verunreinigungen enthält, wobei Mx aus den Elementen Lanthan, Neodym, Chrom oder Mischungen daraus ausgewählt ist und My aus Erdalkalimetallen, Übergangsmetallen, seltenen Erden oder Mischungen daraus ausgewählt ist, **dadurch gekennzeichnet, dass**
auf der mindestens einen Wärmedämmschicht (4) an der vom Bauteil abgewandten Seite eine Al₂O₃ - Schicht (5) ausgebildet ist.

2. Wärmedämmschichtsystem nach Anspruch 1,
**dadurch gekennzeichnet, dass**
My aus Magnesium, Zink, Kobalt, Mangan, Eisen, Nickel, Chrom, Europium, Samarium oder Mischungen daraus ausgewählt ist.

3. Wärmedämmschichtsystem nach einem der vorhergehenden Ansprüche,
**dadurch gekennzeichnet, dass**
die mindestens eine Phase stöchiometrisch 2 bis 20 Mol-%, insbesondere 5 bis 9 Mol-% Mx₂O₃, 5 bis 25 Mol-%, insbesondere 12 bis 17 Mol-% MyO und Rest Al₂O₃ aufweist.

4. Wärmedämmschichtsystem nach einem der vorhergehenden Ansprüche,
**dadurch gekennzeichnet, dass**
die mindestens eine Phase ein Lanthanhexaaluminat mit Magnetoplumbitstruktur ist.

5. Wärmedämmschichtsystem nach einem der vorhergehenden Ansprüche,
**dadurch gekennzeichnet, dass**
das Wärmedämmschichtsystem mindestens eine weitere innere, zwischen dem Bauteil und der Wärmedämmschicht angeordnete Teilschicht (3) aufweist, wobei
die innere Teilschicht Zirkonoxid und/oder eine teil- oder vollstabilisiertes Zirkonoxid umfasst.

6. Wärmedämmschichtsystem nach einem der vorhergehenden Ansprüche,
**dadurch gekennzeichnet, dass**
zwischen der inneren Teilschicht (3) und dem Bauteil (1) eine Haftvermittlerschicht (2) angeordnet ist.

7. Wärmedämmschichtsystem nach Anspruch 6,
**dadurch gekennzeichnet, dass**
die Haftvermittlerschicht (2) eine metallische Schicht, insbesondere eine Aluminiumschicht, eine Platin - Aluminium - Schicht oder eine MCrAlY - Schicht ist, bei der M gleich Fe, Ni oder Co ist.

8. Wärmedämmschichtsystem nach einem der vorhergehenden Ansprüche,
**dadurch gekennzeichnet, dass**
die Al₂O₃ - Schicht (5) überwiegend Al₂O₃ aufweist, insbesondere mehr als 50 Mol-% Al₂O₃, vorzugsweise mindestens 60 Mol-% Al₂O₃.

9. Wärmedämmschichtsystem nach einem der vorhergehenden Ansprüche,
**dadurch gekennzeichnet, dass**
die Al₂O₃ - Schicht (5) ein oder mehrere Bestandteile der Gruppe aufweist, die Magnesium, Calcium, Silizium, Titan, Chrom, Mangan, Hafnium, Tantal, Platin, Cer, Neodym, Gadolinium, Dysprosium, Lanthan, Oxide daraus, Zirkonoxid, stabilisiertes oder teilstabilisiertes Zirkonoxid, und Mischungen davon umfasst.

10. Wärmedämmschichtsystem nach einem der vorhergehenden Ansprüche,
**dadurch gekennzeichnet, dass**
die Al₂O₃ - Schicht (5) und/oder die Wärmedämmschicht (4) und/oder die innere Teilschicht (3) und/oder die Haftvermittlerschicht (2) eine Schichtdicke im Bereich von 0,1 bis 1000 µm, insbesondere 0,2 bis 500 µm aufweisen.

11. Wärmedämmschichtsystem nach einem der vorhergehenden Ansprüche,
**dadurch gekennzeichnet, dass**
das Wärmedämmschichtsystem mehrere Wärmedämmschichten (4) und/oder mehrere innere Teilschichten (3) und/oder mehrere Al₂O₃ - Schichten (5) aufweist, die in der Reihenfolge der inneren Teilschicht, der Wärmedämmschicht und der Al₂O₃ - Schicht von innen nach außen wiederholt oder in beliebiger Reihenfolge angeordnet sind.

12. Bauteil, insbesondere Bauteil einer Strömungsmaschine, insbesondere eines Flugzeugtriebwerks, mit einem Wärmedämmschichtsystem nach einem der vorhergehenden Ansprüche.

13. Bauteil nach Anspruch 12,
**dadurch gekennzeichnet, dass**
das Bauteil eine metallische oder eine gemischt metallisch-keramische Bauteilsubstratoberfläche umfasst, auf der das Wärmedämmschichtsystem aufgebracht ist.

14. Bauteil nach Anspruch 12 oder 13,
**dadurch gekennzeichnet, dass**
das Bauteil eine Komponente der Brennkammer oder der Turbine eines Flugzeugtriebwerks ist.
